Europäisches Patentamt

(19) European Patent Office

Office européen des brevets

(11) **EP 0 717 553 A2**

(12) **EUROPEAN PATENT APPLICATION**

(43) Date of publication:
19.06.1996 Bulletin 1996/25

(51) Int. Cl.$^6$: **H04N 1/405**

(21) Application number: 95119411.7

(22) Date of filing: 08.12.1995

(84) Designated Contracting States:
DE FR GB

(30) Priority: 12.12.1994 JP 331437/94

(71) Applicant: FUJI XEROX CO., LTD.
Minato-ku Tokyo 107 (JP)

(72) Inventors:
- Arai, Kazuhiko,
c/o Fuji Xerox Co., Ltd.
Ashigarakami-gun, Kanagawa 259-01 (JP)
- Oda, Yasuhiro,
c/o Fuji Xerox Co., Ltd.
Ashigarakami-gun, Kanagawa 259-01 (JP)

- Kubo, Masahiko,
c/o Fuji Xerox Co., Ltd.
Ashigarakami-gun, Kanagawa 259-01 (JP)
- Higashimura, Masayo,
c/o Fuji Xerox Co., Ltd.
Ashigarakami-gun, Kanagawa 259-01 (JP)
- Iwaoka, Kazuhiro,
c/o Fuji Xerox Co., Ltd.
Ashigarakami-gun, Kanagawa 259-01 (JP)
- Yamashita, Takayuki,
c/o Fuji Xerox Co., Ltd.
Ashigarakami-gun, Kanagawa 259-01 (JP)

(74) Representative: Hoffmann, Eckart, Dipl.-Ing.
Patentanwalt,
Bahnhofstrasse 103
82166 Gräfelfing (DE)

(54) **Image forming apparatus**

(57) An image forming apparatus includes image signal discrimination means (42) for discriminating whether an image density signal is a line or natural image portion and outputting a discrimination signal, first image density conversion means (313,311) for converting the image density signal and outputting a conversion signal, second image density conversion means (31,312) for converting a range of the image density signal corresponding to a low density portion and outputting a conversion signal indicating a value where an image is not developed, selection means (31,313) for alternately selecting the first and second conversion means with a predetermined period, pulse width modulation means (30) for modulating conversion signal pulse widths and outputting a pulse width modulation signal, pulse width modulation signal period changing means (34) for changing a period of the pulse width modulation signal and the period of selection in accordance with the discrimination signal, and image formation means (200) for forming an image in accordance with the pulse width modulation signal.

FIG.1

## Description

The instant invention relates to an image forming apparatus using an electrophotographic method to form an electrostatic image on a light-sensitive medium. The apparatus uses a pulse width modulation signal of an image density signal to develop and form an image with toner to perform image formation.

In known printers or copying machines, a digital electrophotographic method is widely used to realize high-speed image formation and to provide high image quality. In this method, the scanning of a light-sensitive medium with a light beam and an exposure with pulse width modulation by an analog screen generator reproduces a gradation of an image.

In a known method, an image is formed with a fixed spot diameter of the light beam and a fixed number of lines from a low density portion to a high density portion of the image density signal. Therefore, the contrast of an exposure profile in the low density portion will decrease. Since the exposure amount itself is small, the reproduction capability of dots or lines and the stability of reproduction of gradations and tones, depending on environments, will deteriorate.

To overcome the above and other problems, the contrast of the exposure profile in the low density portion can be increased by making a spot diameter of the light beam small. However, an image-forming optical system that converges the light beam and forms a light beam spot on a light-sensitive medium requires exacting preciseness and is thus very expensive. Accordingly, it has little practical use.

However, when a mixture of a line image, such as a character image, and a natural image, including a halftone image, is to be reproduced, neither the line image nor the natural image can be sufficiently reproduced. This is because the number or density of recording lines that is suitable for reproduction of the line image differs from the number of recording lines that is suitable for reproduction of the natural image.

The present invention has been made in view of the above circumstances and can provide an image forming apparatus which resolves problems known in the art.

One aspect of the present invention is to provide an image forming apparatus that can improve the reproducibility of dots or lines in a low density portion of the image. Further another aspect is to improve the stability in reproduction of gradations and tones and the reproducibility of both line and natural images.

Additional aspects and advantages of the invention will be set forth, in part, in the description that follows and, in part, will be obvious from the description, or may be learned by practice of the invention. The aspects and advantages of the invention may be realized and attained by means of the instrumentalities and combinations particularly pointed out in the appended claims. It will be understood that each of the features described herein can be taken separately or jointly.

An image forming apparatus according to an aspect of the invention may comprise image signal discrimination means for discriminating whether an image density signal belongs to a line image portion or a natural image portion which includes a halftone image, and outputting a discrimination signal; first image density conversion means having a first conversion property for converting the image density signal to a conversion signal and outputting the conversion signal; second image density conversion means having a second conversion property, different from the first conversion property, for converting a part of the image density signal corresponding to a low density portion to a conversion signal indicating a value within a range where an image is not developed, and outputting the conversion signal; selection means for alternately selecting the first and second image density conversion means for a predetermined period; pulse width modulation means for modulating pulse widths of conversion signals output from the first and second image density signal conversion means and outputting a pulse width modulation signal; pulse width modulation signal period changing means for changing a period of the pulse width modulation signal from the pulse width modulation means and the predetermined selection period carried out by the selection means, in accordance with the discrimination signal from the image density signal discriminating means; and image formation means for forming an image in accordance with the pulse width modulation signal from the pulse width modulation means.

Further, the first conversion means may convert a part of the image density signal corresponding to a low density portion to a conversion signal which indicates a value within a range where an image may be developed. Also, the pulse width modulation signal period changing means may change the period of the pulse width modulation signal to an integral multiple or integral reciprocal multiple of the period.

Another aspect of the image forming apparatus including image formation means that may comprise light beam scanning means for scanning a light-sensitive medium with a light beam, an image-forming optical system for converging the light beam scanned by the light beam scanning means and forming a light beam spot of a predetermined size on the light-sensitive medium, where $d_B \leq (1/3)d_p$, where $d_p$ (mm) is a distance between the adjacent light beam spots in a main scanning direction on the light-sensitive medium and $d_B$ (mm) is a diameter of the light beam spot in the main scanning direction where the conversion signal indicates a value within a range where the image is not developed.

Another aspect of the image forming apparatus including image signal discrimination means for discriminating whether an image density signal belongs to a line image portion or a natural image portion which may include a halftone image, and outputting a discrimination signal; first image density conversion means having a first conversion property for converting the image density signal to a conversion signal, and outputting the conversion signal; second image density conversion means having a second conversion property, different from the first conversion property, for converting a part of the image density signal corresponding to a low density portion to a conversion signal indicating a value within a range where an image is not developed, and outputting the conversion signal; selection means for alternately selecting the first or second image density conversion means with a predetermined period; pulse width modulation means for modulating pulse widths of the conversion signals from the first and second image density signal conversion means and outputting a pulse width modulation signal, conversion/non-conversion discrimination means for determining whether conversions of each adjacent group of image density signals by the first and second image density signal conversion means have been carried out; signal selection means for selecting from an output with conversion of each group of the image density signals by the first and second image density signal conversion means and an output without conversion of each group of the image density signals by the first and second image density signal conversion means, based a result of the conversion/non-conversion discrimination means; pulse width modulation signal period changing means for changing a period of the pulse width modulation signal from the pulse width modulation means and the period of selection carried out by the selection means based on the discrimination signal from the image density signal discriminating means; and image formation means for forming an image in accordance with the pulse width modulation signal from the pulse width modulation means.

Another aspect of the image forming apparatus is that the conversion/non-conversion discrimination means may determine whether conversions by the first and second image density signal conversion means have been carried out based on a result of discrimination of the image signal discrimination means. Conversions by the first and second image density signal conversion means may not be carried out if the adjacent group image density signals includes an image density signal belonging to a line image portion and an image density signal belonging to a natural image portion.

Another aspect of the image forming apparatus includes image signal discrimination means for discriminating whether an image density signal belongs to a line image portion or a natural image portion which may include a halftone image and outputting a discrimination signal; first line-reduction conversion means with first image density conversion means having a first conversion property for converting the image density signal to a conversion signal, and outputting the conversion signal; second image density conversion means having a second conversion property, different from the first conversion property for converting a part of the image density signal corresponding to a low density portion to a conversion signal indicating a value within a range where an image may not be developed and outputting the conversion signal; second line-reduction conversion means having third image density conversion means having a third conversion property for converting the image density signal to a conversion signal, and outputting the conversion signal; and fourth image density conversion means having a fourth conversion property, different from the third conversion property, for converting a part of the image density signal corresponding to a low density portion to a conversion signal indicating a value within a range where an image may not be developed, and outputting the conversion signal, first selection means for alternately selecting the first or second image density conversion means and the third or fourth image density conversion means in a predetermined period; pulse width modulation means for modulating pulse widths of the conversion signals from the first and second line-reduction conversion means, and outputting a pulse width modulation signal; pulse width modulation signal period changing means for changing a period of the pulse width modulation signal from the pulse width modulation means and the period of selection carried out by the first selection means based on the discrimination signal from the image signal discrimination means; second selection means for selecting one of the first line-reduction conversion means and the second line-reduction conversion means based on the discrimination signal from the image signal discrimination means; and image formation means for forming an image based on the pulse width modulation signal from the pulse width modulation means.

The first conversion property and the third conversion property may be different. Alternatively they may be approximately the same. The first conversion property and the third conversion property may convert a part of the image density signal corresponding to a low density portion to a conversion signal indicating a value within a range where an image may be developed.

Another aspect of the image forming apparatus includes image signal discrimination means for discriminating whether an image density signal belongs to a line image portion or a natural image portion which may include a halftone image, and outputting a discrimination signal; first image density conversion means having a first conversion property for converting the image density signal to a conversion signal, and outputting the conversion signal; second image density conversion means having a second conversion property, different from the first conversion property for converting a part of the image density signal corresponding to a low density portion to a conversion signal indicating a value within a range where an image may not be developed, and outputting the conversion signal; selection means for alternately selecting the first or second image density conversion means with a predetermined period; pulse width modulation means for modulating pulse widths of the conversion signals from the first and second image density signal conversion means, and outputting a pulse width modulation signal; pulse width modulation signal period changing means for changing a period of the pulse width modulation signal from the pulse width modulation means and the period of selection by the selection means based on the discrimination signal from the image density signal discriminating means; and image formation means for forming an image in accordance with the pulse width modulation signal from the pulse width modulation means.

According to an aspect of the image forming apparatus, the conversion/non-conversion discrimination means can determine whether conversions of each group of adjacent image density signals by the first and second image density signal conversion means have been conducted, and the signal selection means can select one from an output with conversion of each group of image density signals from the first and second image density signal conversion means and an output without conversion of each group of image density signals by the first and second image density signal conversion means based on a result of the conversion/non-conversion discrimination means. Moreover, the first conversion property may convert a part of the image density signal corresponding to a low density portion to a conversion signal indicating a value within a range where an image may be developed, and the pulse width modulation signal period changing means can change the period of the pulse width modulation signal to an integral multiple or integral reciprocal multiple of the period. Further, the image formation means may comprise light beam scanning means that can scan a light-sensitive medium with a light beam, an image-forming optical system that can converge the light beam scanning means and form a light beam spot of a predetermined size on the light-sensitive medium, where $d_B \leq (1/3)d_p$, where $d_p$ (mm) is a distance between the adjacent light beam spots in a main scanning direction on the light-sensitive medium and $d_B$ (mm) is a diameter of the light beam spot in the main scanning direction where the conversion signal indicates a value within a range where the image may not be developed.

Further, the conversion/non-conversion discrimination means may determine whether conversions by the first and second image density signal conversion means have been conducted based on a result of discrimination of the image signal discrimination means.

Another aspect of the image forming apparatus includes image signal discrimination means for discriminating whether an image density signal belongs to a line image portion or a natural image portion which may include a halftone image, and outputting a discrimination signal; first line-reduction conversion means with first image density conversion means having a first conversion property for converting the image density signal to a conversion signal and outputting the conversion signal and second image density conversion means with a second conversion property, different from the first conversion property, for converting a part of the image density signal corresponding to a low density portion to a conversion signal indicating a value within a range where an image may not be developed, and outputting the conversion signals; second line-reduction conversion means having third image density conversion means with a third conversion property for converting the image density signal to a conversion signal and outputting the conversion signal, and fourth image density conversion means with a fourth conversion property, different from the third conversion property, for converting a part of the image density signal corresponding to a low density portion to a conversion signal indicating a value within a range where an image may not be developed, and outputting the conversion signal; first selection means for alternately selecting the first or second image density conversion means and the third or fourth image density conversion means in a predetermined period; pulse width modulation means for modulating pulse widths of the conversion signals from the first and second line-reduction conversion means, and outputting a pulse width modulation signal; pulse width modulation signal period changing means for changing a period of the pulse width modulation signal from the pulse width modulation means and the period of selection carried out by the first selection means based on the discrimination signal from the image signal discrimination means; second selection means for selecting one from the first line-reduction conversion means and the second line-reduction conversion means based on the discrimination signal from the image signal discrimination means; and image formation means for forming an image in accordance with the pulse width modulation signal from the pulse width modulation means. The first conversion property and the third conversion property may be either different from each other or approximately the same. The first conversion property and the third conversion property can convert a part of the image density signal corresponding to a low density portion to a conversion signal indicating a value within a range where an image may be developed.

Another aspect of the image forming apparatus includes a method for forming images. The method may include determining whether an image density signal belongs to a line image portion or a natural image portion which may include a halftone image; outputting a discrimination signal; converting the image density signal to a conversion signal; outputting the conversion signal by a first conversion property; converting a part of the image density signal corresponding to a low density portion to a conversion signal indicating a value within a range where an image may not be developed, outputting the conversion signal by a second conversion property, which is different from the first conversion property; alternately selecting the first or second image density conversion step with a predetermined period; modulating pulse widths of the conversion signals; outputting a pulse width modulation signal; changing a period of the pulse width modulation signal from the period of selection based on the discrimination signal, and forming an image in accordance with the pulse modulation signal.

The invention will be described in conjunction with the following drawings in which like reference numerals designate like elements and wherein:

Fig. 1 illustrates an image processing device and pulse width modulation means of an embodiment of an image forming apparatus;

Fig. 2a-2c illustrates operations of the image forming apparatus according to an aspect of the invention;

Figs. 3a and 3b illustrates data conversion properties for two lookup tables of the image forming apparatus;

Figs. 4a and 4b illustrates other data conversion properties for two lookup tables of the image forming apparatus;

Fig. 5 illustrates an example of results of a visual comparison where a line image and a natural image are reproduced with 400 lpi, 200 lpi and 141 lpi;

Figs. 6a and 6b are illustrations of the operation of the image forming apparatus;

Fig. 7 is a schematic view of an embodiment of the image forming apparatus,

Fig. 8 illustrates an example of a construction of a light beam scanning device of the first preferred embodiment of the image forming apparatus;

Fig. 9 illustrates a construction of a number of recording lines discrimination circuit;

Fig. 10 illustrates a timing operation of the number of recording lines discrimination circuit;

Fig. 11 illustrates a construction of an image signal line-reduction conversion device;

Fig. 12 illustrates recording dots of a line image for the first and second preferred embodiments of the image forming apparatus;

Fig. 13 illustrates recording dots of a natural image for the first preferred embodiment of the image forming apparatus;

Fig. 14 illustrates recording dots in a portion including a boundary between the line image and the natural image for the first preferred embodiment of the image forming apparatus;

Fig. 15 illustrates recording dots of the natural image in a second preferred embodiment of the image forming apparatus;

Fig. 16 illustrates pulse width modulation means and an image processing device of a third preferred embodiment of the image forming apparatus; and

Figs. 17a through 17d illustrate data conversion properties of a pair of two lookup tables according to another embodiment of the image forming apparatus.

Before describing preferred embodiments, the operation of the image forming apparatus will now be explained.

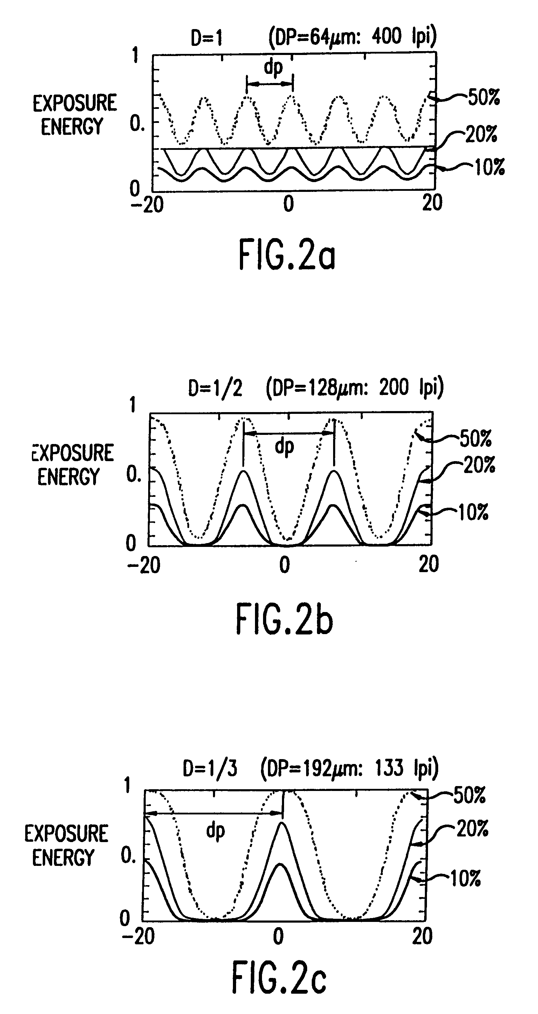

Figs. 2a, 2b and 2c illustrate an exposure energy profile when a light-sensitive medium is scanned by a light beam scanning means, an image-forming optical system and pulse width modulation means. A ratio of the spot diameter of the light beam $d_B$ to the distance (mm) between adjacent pixels in the direction of main scanning $d_p$ is represented as D. Figs. 2a, 2b and 2c show results where the spot diameter of the light beam $d_B$ (mm) is fixed and the distance (mm) between pixels $d_P$ is changed. Accordingly, D can be 1/1, 1/2 and 1/3, respectively.

In the electrophotographic method, a bias potential may be applied in a developing process for preventing the attachment of toner to blank portions of the medium. A border line, shown as a broken line, corresponds to a bias potential in Figs. 2a, 2b and 2c, and indicates a reverse development, which develops exposed portions.

In Fig. 2a, according to the reduction of the pulse width percentage, the exposure energy profile contrast decreases and appears to be "analog-like." An amount exceeding the border line corresponds to the reduced bias potential. As a result, dots or lines cannot be acceptably reproduced.

As illustrated by Figs. 2a, 2b and 2c, when the value of D is gradually reduced from 1/1 to 1/2 and then 1/3, the deterioration of the contrast is minimized. Accordingly, when the spot diameter of the light beam $d_B$ is fixed, the reproducibility of dots or lines, and the stability in reproduction of gradations and tones depending on environments, are improved by decreasing the value of D. The decreasing of the value of D is achieved by reducing the number of lines and increasing the distance between adjacent pixels $d_p$ in the main scanning direction.

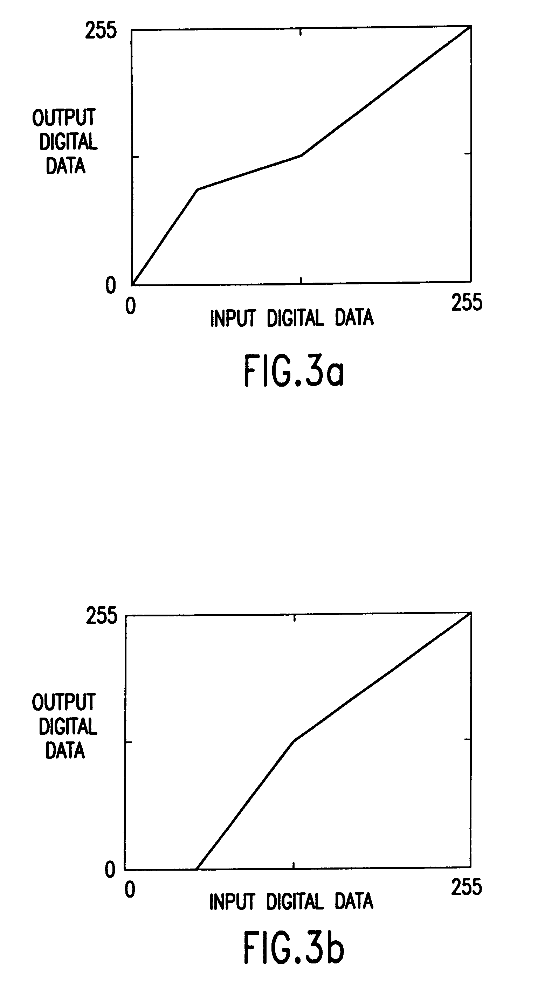

The image forming apparatus according to the present invention can reduce the number of lines in a low density portion by adding a conversion property or factor to the image density signal. Image signal line-reduction conversion means has at least two image density signal conversion means with different properties, for example, as shown in Figs. 3a and 3b.

One of the conversion means has a conversion property or factor such that an output for the low density portion of the image density signal is 0, as shown in Fig. 3b. Therefore, if a low density signal is input, there will be no output. Another conversion means has a conversion property or factor such that when a low density signal is input, the conversion means outputs a signal higher than the usual value for a low density signal. These conversion means operate in a time-divisible and periodic manner. Thus, the input image signal for the low density portion can be reduced at a regular intervals. In other words, the pulse width modulation means may reduce the number of lines in the low density portion, and increase the number of lines in the middle-high density portion. Consequently, dots or lines in the low density portion can be stability reproduced. Additionally, the reproduction of gradations and tones, depending on environments, can be increased.

In the above description, the image density signal conversion means is explained where one of the conversion means has a conversion factor such that an output for the low density portion is 0 to simplify understanding. This, however, is merely an example and is not intended to limit the invention. In an electrophotographic device including light beam scanning, the output of the conversion means, generally, is not 0. The values of the conversion means are within a range corresponding to portions where the electrostatic latent image may not be developed because a laser diode does not emit when a small input signal is input. Alternatively, the developing bias potential is applied to restrain attachment of the toner to blank portions may not permit an image to be developed.

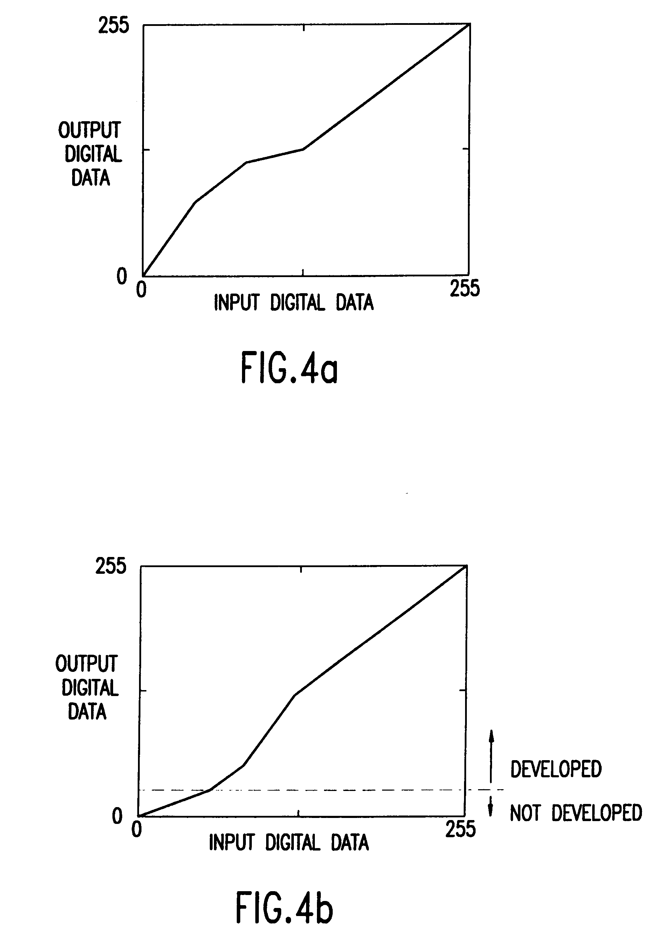

One of the conversion means may have a conversion factor property other than 0 for the low density portion. The conversion factor property of one of the conversion means, for example, can be the output for the low density portion, converted into a value within a range corresponding to portions where the electrostatic latent image may not be developed. This is shown in Figs. 4a and 4b. The image forming apparatus of the present invention can achieve line-reduction due to the one of the conversion means outputting a value within a range corresponding to portions where the electrostatic latent image may not be developed.

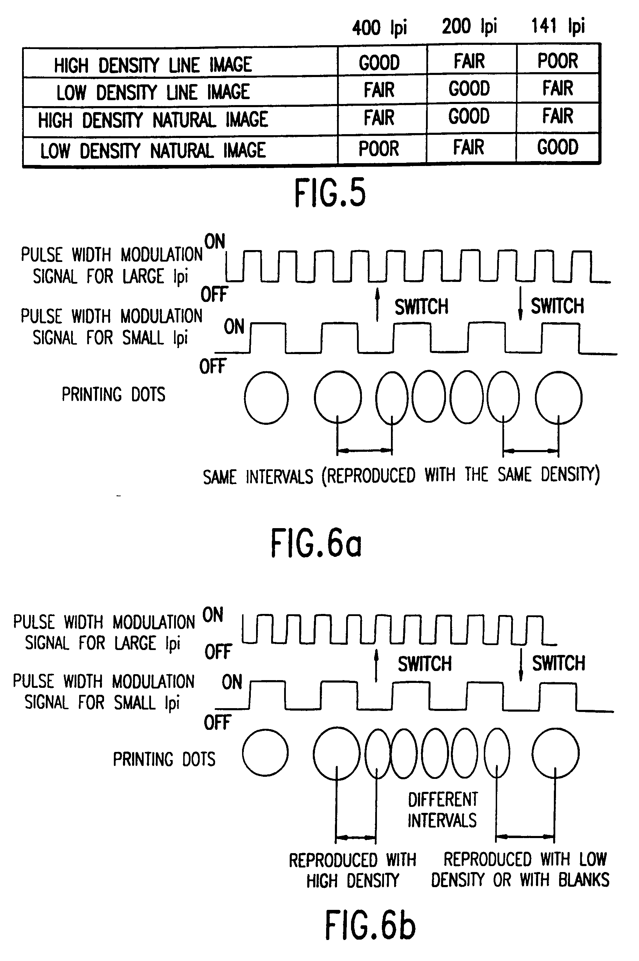

Fig. 5 illustrates the results of a visual comparison of images obtained by reproducing a high density line image, a low density line image, a high density natural image and a low density natural image, at, for example, 400 lines per inch (hereinafter lpi), 200 lpi and 141 lpi. The diameter of main scanning laser beam ($1/e^2$) is 64 μm In Fig. 5, the increased sharpness of the high density line image shows a better reproducibility. Therefore, reproduction with a high recording density, namely, 400 lpi is desirable.

With respect to a low density line image, stable and consistent reproduction and sharpness of a character images with a minimum amount of toner is desirable. Accordingly, reproduction with 200 lpi is thus most desirable. For a low density natural image, stable and consistent reproduction is important and desirable reproduction with 141 lpi is thus desirable. For a high density natural image, sharpness and stability are desirable for an acceptable reproduction. Therefore, 200 lpi is desirable for image reproduction.

As described above, the desirable number of lines can be different for the reproduction of line and natural images. Based on the above described results, a determination is made whether pixels to be recorded, constitute a line image or a natural image. A pulse width modulation signal period can be selected, based on a result of the determination for recording the image. The number of lines will be selected to improve the reproducibility of both line and natural images. For example where the diameter of the main scanning laser beam ($1/e^2$) is 64 μm, the pulse width modulation signal indicating 400 lpi can be selected for a line image, and the pulse width modulation signal indicating 200 lpi can be selected for a natural image. Moreover, as previously described, at least two image density signal conversion means, the output of which can be set to 0 for a low density portion, operate in a time-divisible and periodic manner. Thus reduces the number of lines in the low density portion.

Accordingly, a high density line image can be recorded with 400 lpi, and a low density line image can be recorded having the number of lines less than 400 lpi (for example, 200 lpi). The high density natural image can be recorded with 200 lpi, and the low density natural image is recorded having the number of lines less than 200 lpi (for example, 141 lpi). This can achieve acceptable line and natural images.

Furthermore, the period of the pulse width modulation signal can be changed to an integral multiple or an integral reciprocal multiple. Therefore, as shown in Figs. 6a and 6b, the boundary between the high density line image and the high density natural image can be reproduced, without any blank portions. As shown in Fig. 6a, when the ratio of the pulse width modulation signal period for a large number of lines to the pulse width modulation signal for a small number of lines is an integral number, the time for changing or switching one of the pulse width modulation signals from ON to OFF and another pulse width modulation signal from OFF to ON, can be the same. Consequently, the interval of dots on the boundary between the portions with large and small number of lines is always the same. Thereby, the printing dots can be reproduced with a similar density.

Where the ratio of the pulse width modulation signal period for the large number of lines to the pulse width modulation signal period for the small number of lines is not an integral number, the time for changing or switching one of the pulse width modulation signals from ON to OFF and another pulse width modulation signal from OFF to ON, varies. Therefore, the interval of dots on the boundary between a large and a small number of lines may not be constant. When the switching of signals is carried out so that the interval of printing dots on the boundary is narrow, the image may be reproduced with a high density. If switching of signals is performed so the interval of printing dots on the boundary is broad, the image may be reproduced with a low density, or may even be reproduced with blank portions.

Thus, unevenness will not occur in the reproduction of an image on a boundary between a high density line image and the high density natural image. The unevenness is avoided by having the ratio of the pulse width modulation signal period for a large number of lines to the pulse width modulation signal period for a small number of lines to be an integral number.

A set of image density signals representing adjacent pixels (such as, for example, one group of four pixels) can be formed. It can be determined whether both a line image and a natural image exist in the group. In other words, it can be determined if the pulse width modulation signal period varies. If both a line image and a natural image exist, line reduction can not acceptably performed. Therefore, acceptable line image can be obtained without a deterioration of the sharpness boundary between the line and natural images.

Now embodiments of an image forming apparatus according to the present invention will be described in detail with reference to the drawings.

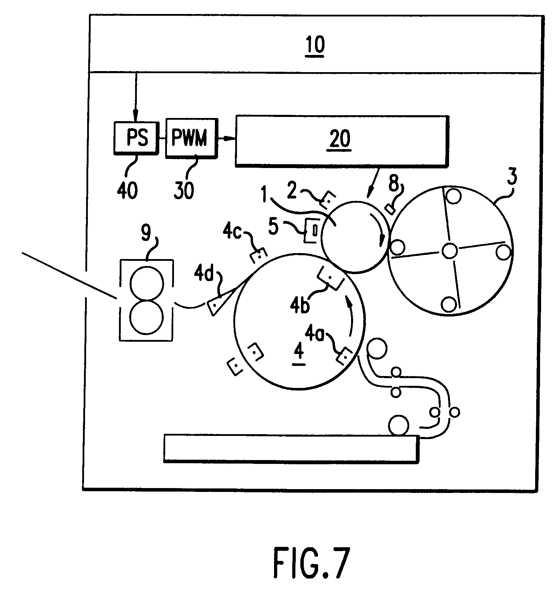

Fig. 7 shows a first embodiment of the image forming apparatus. The image forming apparatus includes a light-sensitive member 1 that can rotate in a direction indicated by an arrow, a charger 2, a light beam scanning device 20, a rotation developing device 3, a transfer drum 4 and a cleaner 5. A document reading device 10, an image processing device 40 and a light beam pulse width modulation device 30 may be positioned generally above light sensitive member 1 and its associated elements.

The document reading device 10 reads the image density of the document. The image processing device 40 may process gradation adjustments for an image density signal to indicate the corresponding image density. The image density signal is transmitted to a light beam pulse width modulation device 30.

The light sensitive member 1 is uniformly charged by the charger 2 in a darkened area. The light beam pulse width modulation device 30 performs an on-off control based on the image density signal supplied by an image processing device 40. The light beam scanning device 20 scans the light sensitive member with a light beam, thereby exposing the light sensitive member 1 to form an electrostatic latent image. The spot diameter of the light beam ($l/e^2$) in the main scanning direction on the light sensitive member 1 may be set to for example 42 μm.

Reproduction of a low density portion of the image is desirable for achieving quality images. Accordingly, it is desirable to reproduce at least 10% of pulse width. As shown in Figs. 2a-c, when the value of D is 1/1, dots or lines are reproduced in the 10% pulse width. When the value of D is 1/3, dots or lines can be satisfactorily reproduced in the 10% pulse width. Therefore, the value of D can be set to be 1/3 or less, so the inequality is satisfied:

$$d_b \leq (1/3)(d_p)$$

If the above inequality is satisfied, image reproduction in the low density portion is satisfactorily performed.

The rotation developing device 3 includes four developing devices containing, for example, yellow, cyan, magenta and black toner color. Each of four developing devices adopts a reverse developing method utilizing two-component magnetic brush development. Average diameter of toner used here, for example, is generally approximately 7 μm. The rotation developing device 3 rotates to develop the electrostatic latent image with a desired color toner. At that time, a bias voltage is applied to the developing roller to prevent attachment of toner to blank portions.

The transfer drum 4 rotates with a recording medium or sheet attached to a peripheral surface. An image on the light-sensitive member 1, which is developed with the appropriate toner, is transferred to the recording sheet by a transfer corotron 4b. Formation, development and transfer of the electrostatic latent image is carried out for each color. Toner on the recording sheet is fixed by a fixing device 9, to form a multi-color image.

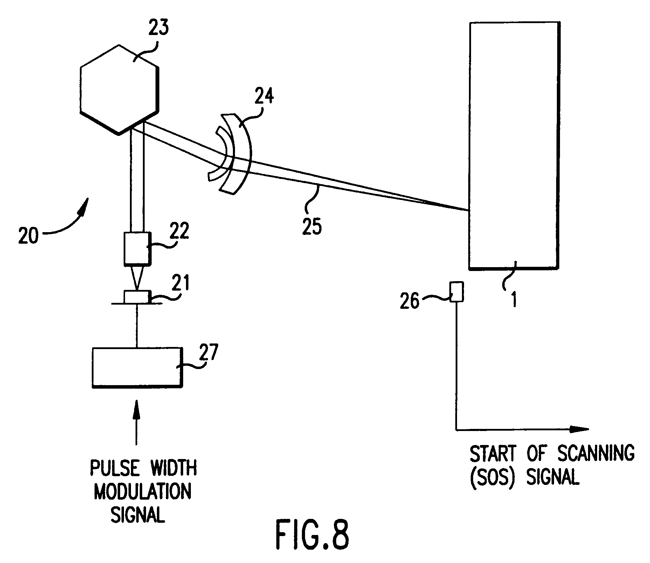

Fig. 8 illustrates the light beam scanning device 20 in detail. The light beam scanning device 20 includes a semiconductor laser 21, a collimator lens 22, a polygonal mirror 23 and an f-Θ lens 24 or the like. The start of the scanning signal generation sensor 26 generates a start of a scanning (SOS) signal, and may be included in the light beam scanning device 20. The semiconductor laser 21 may carry out the on-off control on the light beam, based on the pulse width modulation signal transmitted from the light beam pulse width modulation device 30.

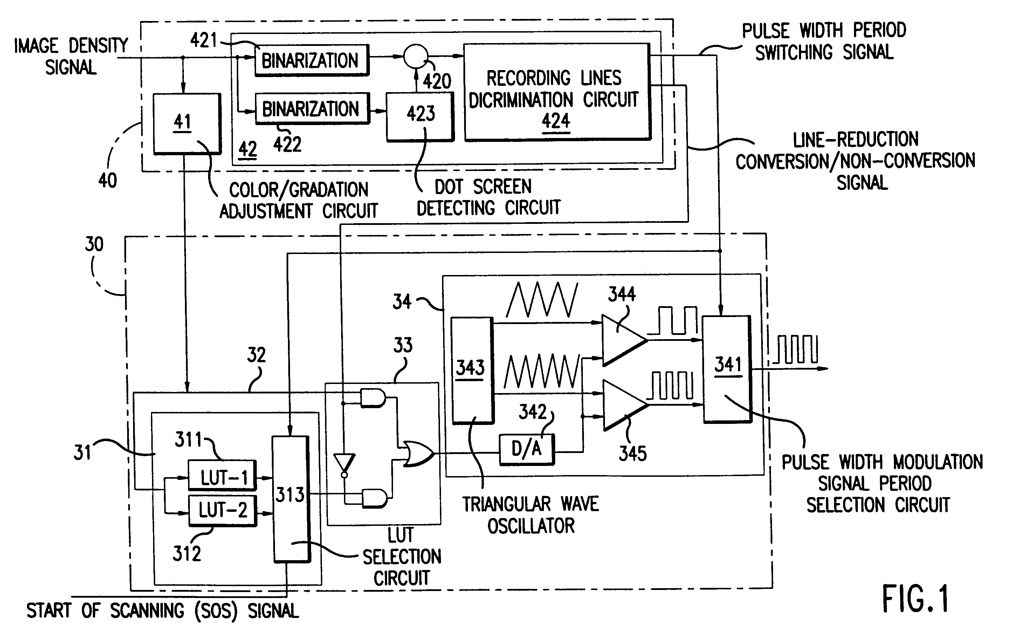

Fig. 1 illustrates a light beam pulse width modulation device 30 and an image processing device 40 in detail. The light beam pulse width modulation device 30 includes an image signal line-reduction conversion device 31, a non-conversion path 32, a line-reduction conversion/non-conversion selection circuit 33 and a pulse width modulation signal period changing device 34. The image signal line-reduction conversion device 31 may comprise a first lookup table (LUT) 311, a second lookup table (LUT) 312 and an LUT selection device 313. The line-reduction conversion/non-conversion selection circuit 33 may be a simple logic circuit. The pulse width modulation signal period changing device 34 includes a pulse width modulation signal period selection circuit 341, a D/A converter 342, a triangular wave oscillator 343 and a pair of comparators 344 and 345.

The image processing device 40 includes a color/gradation adjustment circuit 41 and a natural image/line image discrimination circuit 42. The natural image/line image discrimination circuit 42 further includes a pair of binarization circuits 421 and 422, a dot screen detecting circuit 423 and a discrimination circuit 424 for the number of recording lines.

Next, the operation of the pulse width modulation signal for the on-off control of the generated light beam based on an image density signal transmitted from the document reading device 10 will be described.

The image density signal transmitted from the document reading device 10 is input to the color/gradation adjustment circuit 41 and the natural image/line image discrimination circuit 42. Extraction of line image portions are carried out by a pair of binarization circuits 421 and 422 and a dot screen detection circuit 423. The image portions, other than the line image portions, are regarded as natural images. Based on the natural image/line image determination results, the discrimination circuit 424 outputs a pulse width period switching signal and a line-reduction conversion/non-conversion signal to the light beam pulse width modulation device 30.

The pulse width period modulation signal serves to select a pulse width period, which is suitable for each of the natural images and the line images, and to control selection of the appropriate LUT for synchronization with the selected pulse width period. The line-reduction conversion/non-conversion signal functions to restrain line-reduction at a boundary portion between a natural and line image portions. In this embodiment, resolution of the image density signal is set, for example, to 400 lpi. The pulse width period switching signal is set so a pulse width modulation signal having a short period, corresponding to 400 lpi, can be selected for the line image portion, and a pulse width modulation signal having a long period corresponding to, for example, 200 lpi is selected for the natural image portion. The line-reduction conversion/non-conversion signal refers to adjacent four pixels. If there is no switching between natural images and line images within four pixels, a line-reduction conversion is carried out. On the other hand, if switching between natural images and line images exists during four pixels, a line-reduction conversion is not performed.

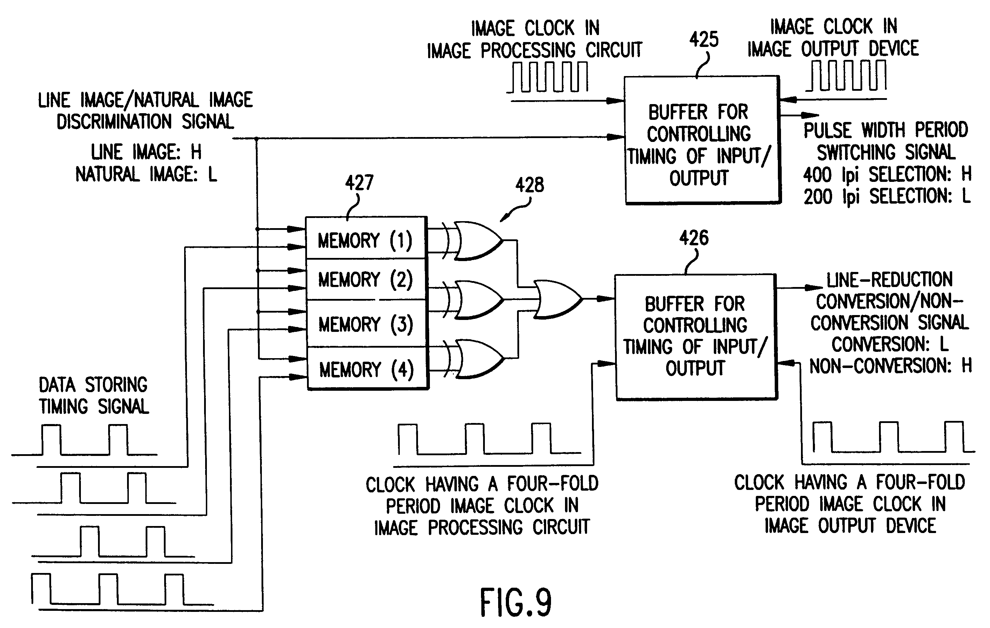

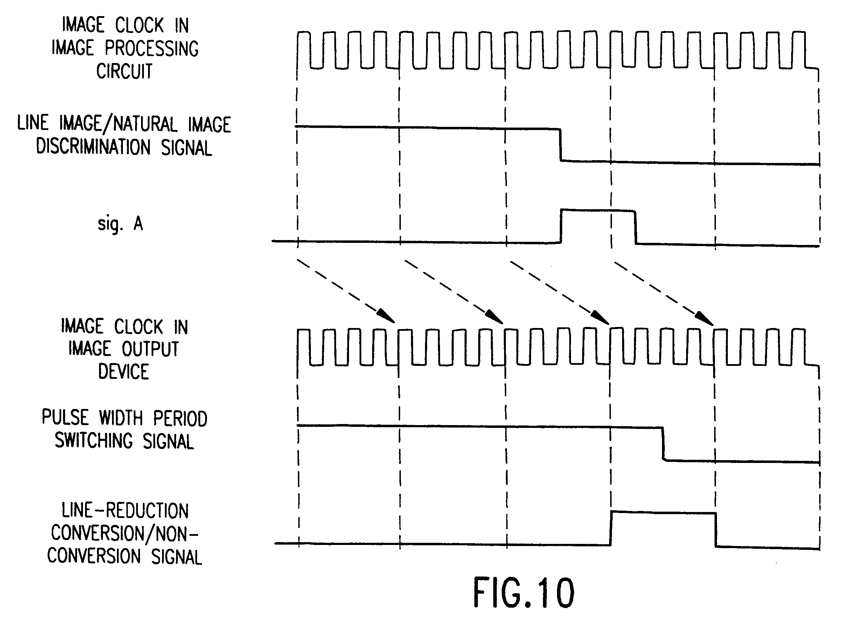

Fig. 9 illustrates the discrimination circuit 424 for the number of recording lines in detail, and Fig. 10 shows the appropriate timing. The discrimination circuit 424 includes a pair of buffers 425 and 426 that controls the timing of input/output of data between the image processing device 40 and the pulse width modulation device 30, four memories 427(1)-427(4), which store each of groups of four adjacent pixels in order, and a simple logic circuit 428.

The generation of the pulse width period switching signal and the line-reduction conversion/non-conversion signal, with the above-described structure, will now described. The image density signal that is input to the natural image/line image discrimination circuit 42 can be binarized by binarization circuits 421 and 422. A density, which exceeds a threshold value predetermined by the binarization circuit 421, is regarded as a line image, so a binary digit (referred to as H level) is output. In the natural image portion, if a dot screen image exceeds the threshold value, dot screens are detected by a dot screen detection circuit 423. A subtracter 420 then subtracts the output of the dot screen detection circuit 423 from the output of the binarization circuit 421. Therefore, the output of the subtracter 420 is at the H level only for a line image portion, and inputs the number of recording lines to the discrimination circuit 424. Here, output portions at the L level are regarded as natural image portions. The natural image/line image discrimination signal can be transmitted to the input/output timing controlling buffer 425 and appropriate memories 427 as shown in Fig. 9.

The line image/natural image discrimination signal transmitted and input into the input/output timing controlling buffer 425 is synchronized with an image clock in the image processing circuit. The buffer 425 controls the timing of input/output of data between the image processing device 40 and the pulse width modulation device 30. The data is output to the pulse width modulation device 30 with a delay of four pixels synchronized with the image clock in the image output device. The output signal is the pulse width switching signal, which may be, for example, 400 dpi (H) for the line image and 200 dpi (L) for the natural image.

The line image/natural image discrimination signals that are transmitted toward the memories 427, may be input in synchronization with the data storing timing signals. A signal A (sig. A) is generated by the logic circuit 428. The signal A represents H when the line image/natural image discrimination signal changes from H to L or from L to H among four adjacent pixels, and represents L when there is no change. The signal A is input to an input/output timing controlling buffer 426 in synchronization with a clock having a period four times the image clock's period. The input/output timing controlling buffer 426 controls the timing of input/output of data between the image processing device 40 and the pulse width modulation device 30. As with the buffer 425, data is output to the pulse width modulation device 30 with a delay at four pixels in synchronization with a clock having a period as in the image clock in the image output device. This output signal is the line-reduction conversion/non-conversion signal that indicates L for conversion and H for non-conversion.

The image density signal that is input to the color and gradation adjustment circuit 41 may be converted and gradually adjusted in preparation of printing with the appropriate color, and transmitted to the light beam pulse width modulation device 30.

The image density signal transmitted toward the light beam pulse width modulation device 30 may be distributed to the image signal line-reduction conversion device 31 and the non-conversion path 32. The image density signal input to the image signal line-reduction conversion device 31 is converted by a pair of lookup tables (LUT) 311 and 312. The converted image density signal is alternately selected by the LUT selection device 313. Here, if the pulse width period switching signal indicates a line image portion, the LUT selection device 313 selects LUT-1, LUT-2, LUT-1, LUT-2, LUT-1, LUT-2, ..., in synchronization with the image density signal. Where the pulse width period switching signal indicates a natural image portion, periods of LUT-1, LUT-1, LUT-2, LUT-2, LUT-1, LUT-1, LUT-2, LUT-2, ..., and LUT-2, LUT-2, LUT-1, LUT-1, LUT-2, LUT-2, LUT-1, LUT-1, ..., are alternately selected for every two scanning cycles, in synchronization with the image density signal.

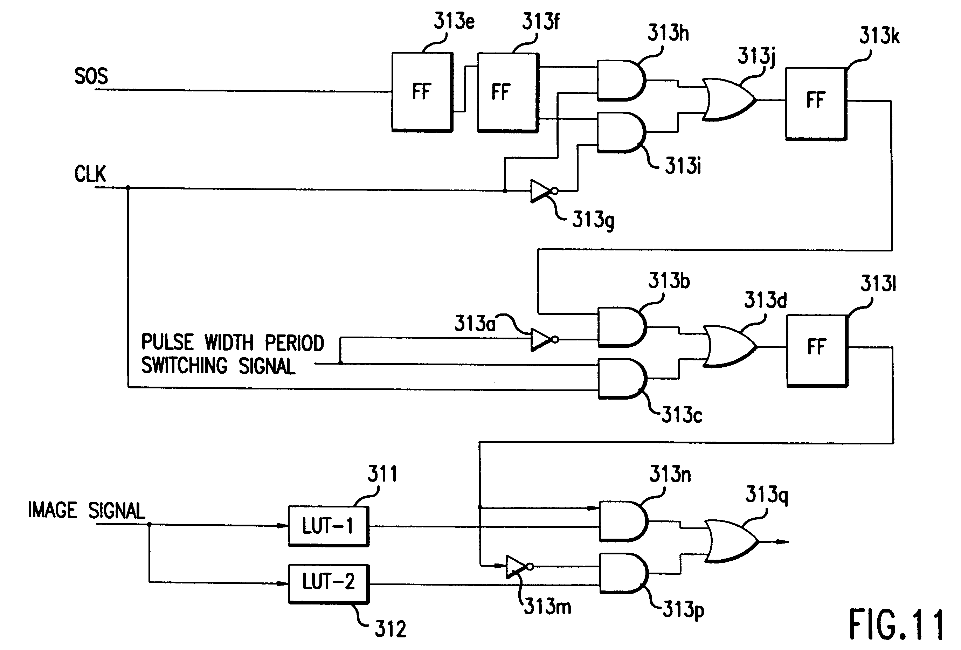

Fig. 11 illustrates the image signal line-reduction conversion device 31. It includes logical elements 313a-313d, and functions to select a first selection control signal to select the first and second lookup tables in the order LUT-1, LUT-2, LUT-1, LUT-2, LUT-1, LUT-2, ..., when the pulse width period switching signal is H. The logic circuit selects a second selection control signal, for a first and second lookup table order of LUT-1, LUT-1, LUT-2, LUT-2, LUT-1, LUT-1, LUT-2, LUT-2, ... and LUT-2, LUT-2, LUT-1, LUT-1, LUT-2, LUT-2, LUT-1, LUT-1 ..., which alternately appear for every two scanning cycles, when the pulse width period switching signal is L.

Another logical circuit includes logic elements 313e-313k and functions to generate the second selection control signal by reversing the phase of the image clock for every two inputs at a start of scanning (SOS) signals and doubling the image clock period. The other logical circuit can comprise logic elements 313l, 313m, 313n, 313 p and 313a, which function to select the outputs of the first and second lookup tables 311 and 312 by the first or second selection control signals.

For example, a resolution of the image density signal is set, for example, to 400 lpi. Lookup tables 311 and 312 have the properties as shown in Figs. 3a and 3b. The output of one of the lookup tables LUT-2 for an input of an image density signal indicating a low density is set to 0, and for an input of an image density signal indicating a high density is set, not to 0, but for printing. Therefore, the image density signal is converted to select, for example, one of 200 lpi for a low density line image, 400 lpi for a high density line image, 141 lpi for a low density natural image and 200 lpi for a high density natural image. The converted image density signal is then transmitted to the line-reduction conversion/non-conversion selection circuit 33.

The line-reduction conversion/non-conversion selection circuit 33 selects one from the image density signal converted by line-reduction conversion output from the image density signal line-reduction conversion device 31 and the image density signal without conversion transmitted through the non-conversion path 32. The selection is based on the instructions from the line-reduction conversion/non-conversion signal that corresponds to four adjacent pixels. When there is no switching between natural image/line images in the adjacent four pixels, a line-reduction conversion is conducted. When there is switching of natural image between a line and an image in four adjacent pixels, line-reduction conversion is not conducted.

When a line-reduction conversion is determined to be appropriate, the line-reduction conversion/non-conversion selection circuit 33 transmits an image density signal, which is converted by a line-reduction conversion output from the image density signal line-reduction conversion device 31, to the pulse width modulation signal period changing device 34. However, if a line-reduction conversion is not appropriate, the line-reduction conversion/non-conversion selection circuit 33 transmits an image density signal, without the conversion, through the non-conversion path 32 to the pulse width modulation signal period changing device 34. This prevents line-reduction in the switching portion of line image/natural image, and deterioration of sharpness of the line image is prevented.

The image density signal that is transmitted to the pulse width modulation signal period changing device 34, undergoes D/A conversion and is transmitted to the comparators 344 and 345. The comparators 344 and 345 compare the signal size with the pulse width modulation reference signal size. The pulse width modulation reference signal size has a triangular waveform corresponding to 400 lpi and 200 lpi respectively, and is output by the triangular wave oscillator for conversion to the pulse width modulation signals. The pulse width modulation signal period selection circuit 341 can select either a 400 lpi pulse width modulation signal or a 200 lpi pulse width modulation signal, based on the pulse width period switching signal.

In the above process, the pulse width modulation signal that indicates 200 lpi for the low density line image, 400 lpi for the high density line image, 141 lpi with screen angle of 45° for the low density natural image and 200 lpi for the high density natural image, is generated. The ratio of the periods for the two pulse width modulation signals is 1:2 (the ratio is represented by integral numbers). Due to this integral ratio, the boundary of natural image/line image is reproduced without blank portions, as shown in Fig. 6a. Therefore, when the ratio of period of the pulse width modulation signal for the large number of lines to the period of the pulse width modulation signal for the small number of lines is integral, the time for changing switching one pulse width modulation signal from ON to OFF and another pulse width modulation signal from OFF to ON is the same. Consequently, the interval of dots on the boundary between the portions with a large and small number of lines is always the same. Whereby, the printing dots is reproduced with the same density.

However, where the ratio of the pulse width modulation signal period for the large number of lines to the pulse width modulation signal period for the small number of lines is not integral, as in Fig. 6b, the timing for changing or switching one a pulse width modulation signal from ON to OFF and another pulse width modulation signal from OFF to ON are always varied. Therefore, the interval of dots at the boundary between the portions of a large and small number of lines is not constant. As a result, if the switching of signals is conducted so the printing dot at a boundary is narrow, the image at that point is reproduced with a high density. If switching of signals conducted with a timing such that the printing dot interval on the boundary is broad, the image at that part is reproduced with a low density, or reproduced with blank portions.

As described above, by controlling the ratio of the pulse width modulation signal period for a large number of lines to the pulse width modulation signal period for a small number of lines so the ratio is integral, any unevenness at the boundary between the high density line image and the high density natural image is prevented. A generated pulse width modulation signal is transmitted to, for example, a laser diode (LD) driver of the light beam scanning device 20. Based on the signal, ON-OFF control of the light beam is performed to form an image.

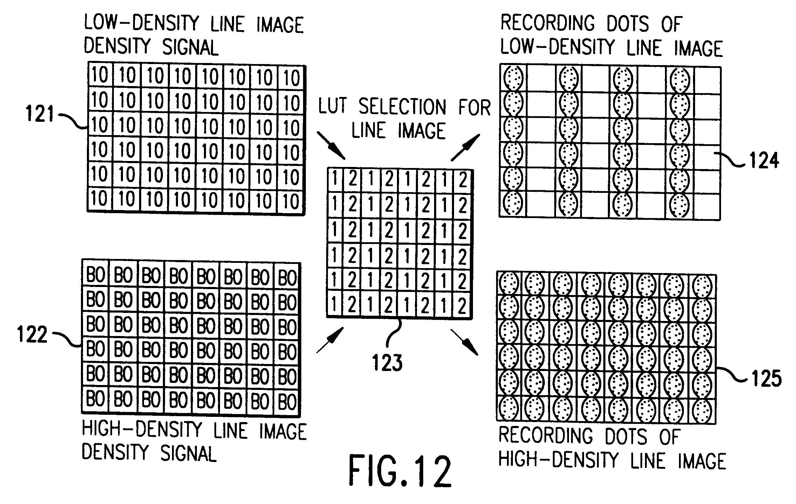

Next, an example of the processing operation will be described. Fig. 12 illustrates arrangements of recording dots for low and high density line images. In Fig. 12, Table 121 illustrates low density line image density signals, wherein each of the small frames indicates a pixel density. The pixel density is represented at a gradation level of 10 (16 digits). Table 122 illustrates the high density line image density signals, wherein the pixel density is at a gradation level of B0 (16 digits). Table 123 illustrates the lookup table selection, when the density signal indicates a line image, and the LUT selection device 313 selects LUT-1, LUT-2, LUT-1, LUT-2, LUT-1, LUT-2, ..., in synchronization with the image density signal for every line scanning.

When the low density image for all line image density signals is at a gradation of 10 (16 digits), as shown in Table 121. If the first lookup table LUT-1 is selected, its conversion property or factor is shown in Fig. 3a. The output data has a value other than 0 for a gradation of 10. Accordingly, dots can be recorded and an image formed. If the second lookup table LUT-2 is selected, its conversion property or factor is as shown in Fig. 3b. The output data for a gradation of 10 is 0, and accordingly, dots not recorded by an image formation. Where the LUT selection, for a low density line image density signal is as shown in Table 121, dots are not recorded when the second lookup table LUT-2 is selected, as shown in image 124 of Fig. 12. Therefore, the number of dots are reduced and a line-reduction, as performed in this embodiment, are reduced to 200 lpi.

For the LUT selection, as shown in Table 123, with a high density line image density signal, as shown in Table 122, all dots are recorded as an image 125, because both LUT-1 and LUT-2 have output properties other than 0 for the high density portion. Therefore, a line-reduction is not conducted, where the number of lines is 400 lpi.

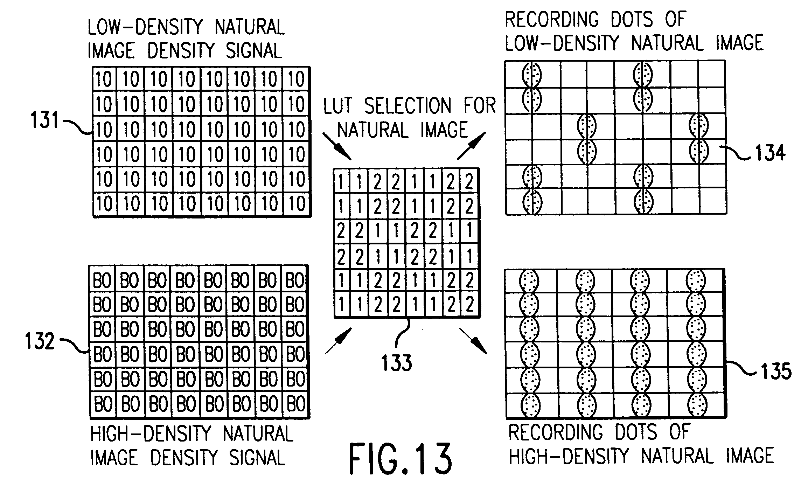

Fig. 13 illustrates an arrangement of the recording dots of a low density and high density natural image. In Fig. 13, Table 131 illustrates the low density natural image density signal, wherein each of small frames indicates a pixel density. The pixel density is represented at a gradation level of 10 (16 digits). Table 132 shows the high density natural image density signals, wherein the pixel density is at a gradation level of B0 (16 digits). Table 133 shows the lookup table selection, when the density signal indicates a natural image, and the LUT selection device 313 selects an order of LUT-1, LUT-1, LUT-2, LUT-2, LUT-1, LUT-1, LUT-2, LUT-2, ..., and LUT-2, LUT-2, LUT-1, LUT-1, LUT-2, LUT-2, LUT-1, LUT-1, ..., alternately for every two scanning cycles. As shown in Table 131, the low density image, when all natural image density signals are at a gradation of 10 (16 digits), and if the first lookup table LUT-1 is selected, its property is as shown in Fig. 3a. In other words, the output data has a value other than 0 for a gradation of 10. Accordingly, dots are recorded by an image formation.

When the second lookup table LUT-2 is selected, its conversion property or factor is shown in Fig. 3b. That is, the output data for a gradation of 10 is 0. Accordingly, an image formation is not conducted. For a natural image, the period for selecting a lookup table is twice as long as that of the line image. Therefore, the selection period is reversed for every two scanning periods. For the LUT selection as shown in Table 133, with low density natural image density signals, as in Table 131, dots of a low density natural image are recorded as an image 134 in Fig. 13. No dots will not be recorded at portions where the second lookup table (LUT-2) is selected. Therefore, the number of dots can be reduced, and dots may be alternately formed in both of the main scanning and sub scanning directions, to form a staggered arrangement.

For LUT selection in Table 133, for high density natural image density signals as shown in Table 132, all of the dots are recorded as an image 135, because both LUT-1 and LUT-2 have properties output other than 0 for a high density portion. Therefore, line-reduction using a lookup table is not conducted.

Consequently, the number of recording lines is 200 lpi for the low density line image, 400 lpi for the high density line image, 141 lpi for the low density natural image and 200 lpi for the high density natural image. Fig. 5 illustrates a visual comparison of reproduction of the line and natural images with 400 lpi, 200 lpi and 141 lpi. Both the line and natural images are well reproduced by the present invention.

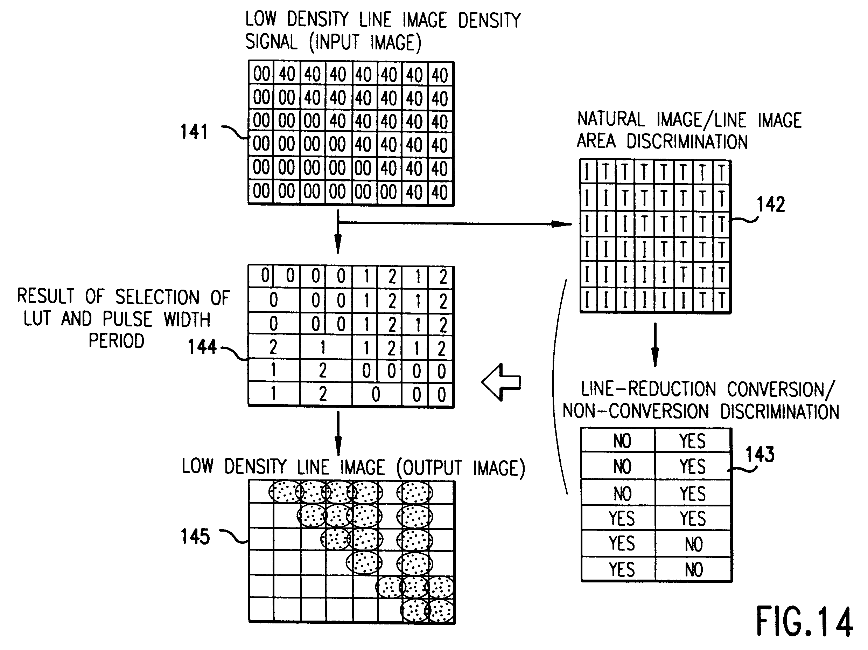

Fig. 14 depicts recording dots in a switching portion between the natural and line images. Table 141 illustrates low density line image density signals, which include a boundary portion between the low density line image the pixel density having a gradation level of 40 (16 digits) and the natural image pixel density having a gradation level of 10 (16 digits).

The line image/natural image discrimination for those density signals carried out by the natural image/line image discrimination circuit 42 are shown in Table 142. I indicates the pixel that is determined to be the natural image area and T indicates the pixel that is determined to be the line image area. A group of four adjacent signals result in Table 142 input to memories 427. Where both I and T exist, a line-reduction conversion is not conducted. In other situations, a line-reduction conversion is conducted. The result is shown in Table 143.

Table 144 illustrates the selection of a LUT and pulse width period, in accordance with the results of a natural image/line image discrimination and line-reduction conversion/non-conversion determination. The area, including the unconverted line-reduction area is represented as 0, and selection of a LUT is represented as "1" and "2". In an area consisting of only of a low density line image, two lookup tables are alternately selected, similar to the selection of a LUT in Fig. 12. In an area consisting of only a natural image, two lookup tables are alternately selected with a period twice as long as that for a line image, which is similar to the selection of a LUT in Fig. 13. Image 145, which is output after processing, is a line image that does not exhibit deterioration of sharpness at the boundary portions between the line and natural images.

In the image signal line-reduction conversion device 31 of a present embodiment, if the pulse width period switching signal indicates the natural image portion, the LUT selection device 313 selects an order of the LUT, with alternate periods such as LUT-1, LUT-1, LUT-2, LUT-2, LUT-1, LUT-1, LUT-2, LUT-2, ..., and LUT-2, LUT-2, LUT-1, LUT-1, LUT-2, LUT-2, LUT-1, LUT-1, .... The switching occurs at every two scanning cycles.

Another embodiment of the present invention does not switch the LUT selection period for every two laser scanning cycles, but selects the periods in order of LUT-1, LUT-1, LUT-2, LUT-2, LUT-1, LUT-1, LUT-2, LUT-2, ..., and LUT-2, LUT-2, LUT-1, LUT-1, LUT-2, LUT-2, LUT-1, LUT-1, ..., for every scanning cycle. This is achieved by removing the flip-flop 313e from the circuit in the image signal line-reduction conversion device.

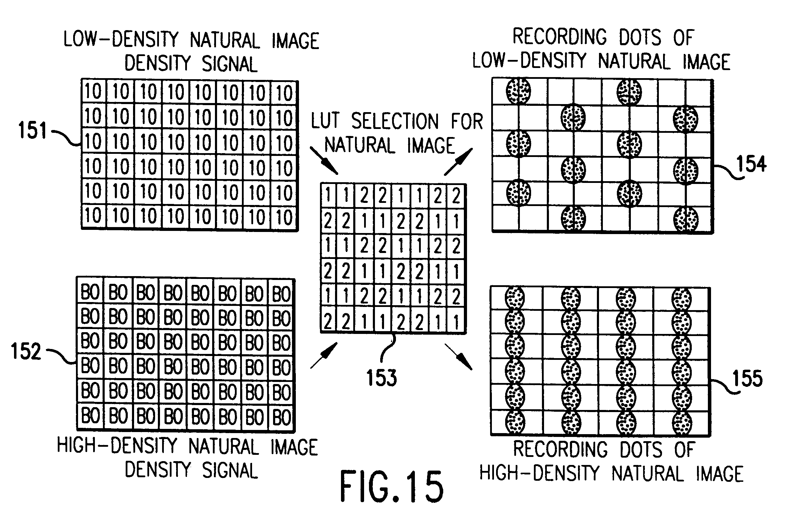

Figs. 12 and 15 illustrate arrangements of recording dots in low density image and high density natural images formed by the second preferred embodiment. There is no difference in the high density natural image in the first and second embodiments. With respect to the low density natural image, the reproduction stability is the same as in the first embodiment. This is because intervals between the dots are the same as in the first embodiment. The second embodiment differs from the first embodiment in that the number of recording lines is larger than 141 lpi. Thus, it is harder to detect the image or screen display by a visual observation. Thus, a smooth and desirable image reproduction is achieved.

The first embodiment has a single image signal line-reduction conversion device 31 and uses the same lookup tables for both of the natural and line images.

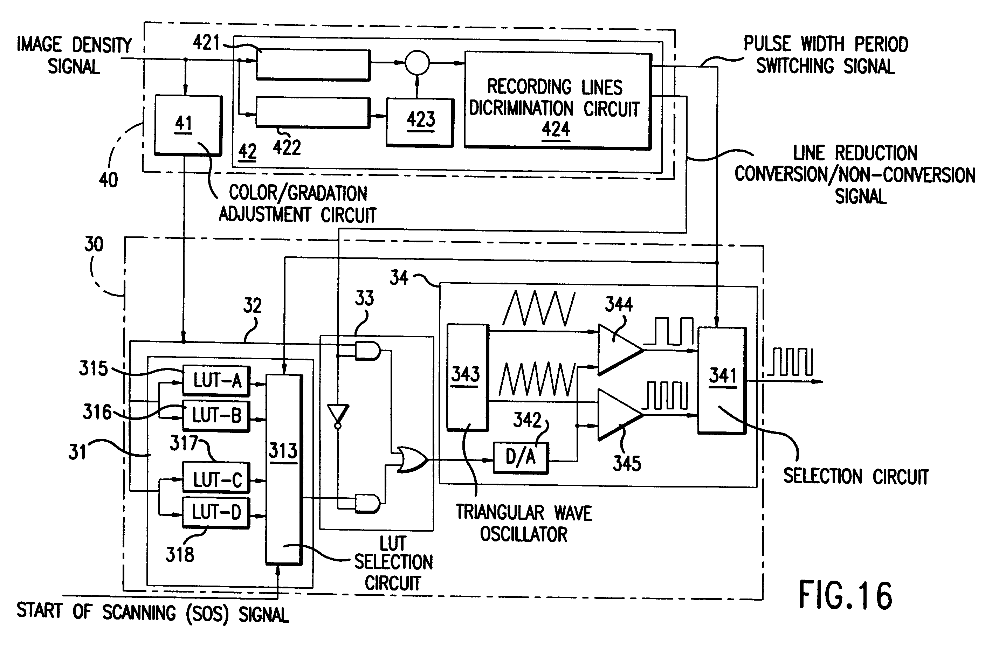

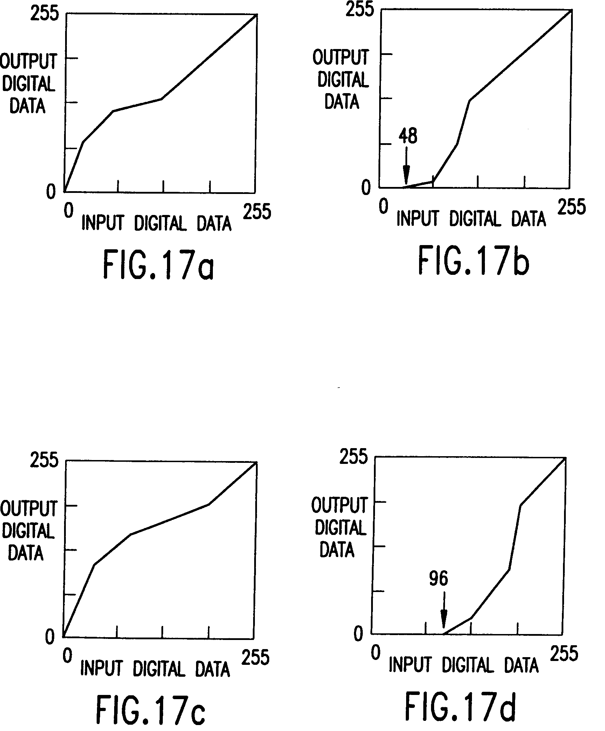

A third embodiment of the invention includes lookup tables 315 and 316 LUT-A and LUT-B respectively for a natural image and lookup tables 317 and 318, LUT-C and LUT-D, respectively for a line image. The third embodiment is illustrated in Fig. 16. Each of the lookup tables has properties as illustrated in Figs. 17a-17d. The lookup tables LUT-B and LUT-D have an output of 0 for an inputted low density signal. LUT-B can output 0 for input data having a value of 32 or less, and LUT-D can output 0 for input data having a value of 96 or less.

If the pulse width period switching signal indicates a natural image portion, the lookup tables for the natural image, LUT-A and LUT-B, are selected similar in an order to the first preferred embodiment. For example, the lookup tables are selected in the order LUT-A, LUT-A, LUT-B, LUT-B, LUT-A, LUT-A, LUT-B, LUT-B, ..., and LUT-B, LUT-B, LUT-A, LUT-A, LUT-B, LUT-B, LUT-A, LUT-A, .... The lookup tables are switched for every one or two scanning cycles.

Where the pulse width period switching signal indicates a line image portion, the lookup tables for the line image, LUT-C and LUT-D are selected in an order similar to the first preferred embodiment. The lookup tables are switches in the order of LUT-C, LUT-D, LUT-C, LUT-D, LUT-C, LUT-D, LUT-C, LUT-D, .... etc.

In general, a line image is reproduced with a higher density than a natural image. For example, for a natural image, input data from 0 to 192 is mostly used. However, in a line image, input data from 64 to 256 is mostly used. In the third embodiment, the difference in ranges for the input data used for line and the natural images are considered in the selection process. Accordingly, image reproduction is performed utilizing lookup tables, which are suitable for natural line images. Therefore, both natural and line images are reproduced with more detail, than compared to the first preferred embodiment.

According to the invention, it is possible to carry out an image formation with the number of recording lines being selected to be suitable for a high density line image, a low density line image, a high density natural image and a low density natural image. It is also possible to form an image without the deterioration of sharpness at the boundary portions between natural and line images. Consequently, a sharp and exact reproduction of both of natural and line images can be achieved.

The foregoing description of preferred embodiments of this has been presented for purposes of illustration and description. It is not intended to be exhaustive or to limit the invention to the precise form disclosed, and modifications and variations are possible in light of the above teachings or may be acquired from practice of the invention. For example, similar components from any one of the embodiments may be used with others of the embodiments. The embodiments were chosen and described to explain the principles of the invention and its practical application to enable one skilled in the art to utilize the invention in various embodiments and with various modifications as are suited to the particular use contemplated. It is intended that the scope of the invention be defined by the claims appended hereto, and their equivalents.

## Claims

1. An image forming apparatus comprising:

image signal discrimination means (42) for discriminating whether an image density signal designates a line image portion or a natural image portion and outputting a discrimination signal;

first image density conversion means (31,311) having a first conversion property for converting said image density signal to a first conversion signal and outputting said first conversion signal;

second image density conversion means (31,312) having a second conversion property, different from said first conversion property, for converting a part of said image density signal corresponding to a low density portion to a second conversion signal indicating a value within a range where an image is not developed, and outputting said second conversion signal;

selection means (31,313) for alternately selecting said first or second image density conversion means (31,311; 31,312) in a predetermined order and predetermined period;

pulse width modulation means (30) for modulating pulse widths of said first and second conversion signals from said first and second image density signal conversion means (31,311; 31, 312) and outputting a pulse width modulation signal;

pulse width modulation signal period changing means (34) for changing a period of said pulse width modulation signal from said pulse width modulation means (30) and the predetermined period of said selection means (31,313) based on said discrimination signal from said image density signal discriminating means (42); and

image formation means (200) for forming an image in accordance with said pulse width modulation signal from said pulse width modulation means (30).

2. The image forming apparatus according to claim 1, wherein said first image density conversion means (31,311) converts a part of said image density signal corresponding to a low density portion to a first conversion signal indicating a value within a range in where an image may be developed.

3. The image forming apparatus according to any one of the preceding claims, wherein said pulse width modulation signal period changing means (30) changes the period of said pulse width modulation signal to one of an integral multiple of said period and an integral reciprocal multiple of said period.

4. The image forming apparatus according to any one of the preceding claims, wherein said image formation means (200) comprises:

   light beam scanning means (20) for scanning a light-sensitive medium with a light beam (25); and

   an image-forming optical system (200a) for converging the light beam and forming a light beam spot of a predetermined size on said light-sensitive medium, whereby the apparatus satisfies the condition:

   $$d_B \leq (1/3)d_p,$$

   where $d_p$ (mm) is a distance between said light beam spots adjacent to each other in a main scanning direction on said light-sensitive medium and $d_B$ (mm) is a diameter of said light beam spot in the main scanning direction in the case of forming an image when said conversion signal indicates a value within a range in where said image may not be developed.

5. An image forming apparatus according to any of the preceding claims, further including conversion/non-conversion discrimination means (33) for determining whether said conversions of each adjacent image density signal by said first and second image density signal conversion means (31,311; 31,312) have been carried out; and

   signal selection means (32) for selecting one of an output that is converted of each group of said image density signals by said first and second image density signal conversion means (31,311; 31,312) and an output that is not converted of each group of said image density signals by said first and second image density signal conversion means (31,311; 31,312) based on a determination of said conversion/non-conversion discrimination means (33).

6. The image forming apparatus according to claim 5, wherein said conversion/non-conversion discrimination means (33) for determining whether conversions by said first and second image density signal conversion means (31,311; 31,312) are carried out is based on a result of discrimination of said image signal discrimination means (42).

7. An image forming apparatus comprising:

   image signal discrimination means (42) for determining whether an image density signal designates a line image portion or a natural image portion, including a halftone image, and outputting a discrimination signal;

   first line-reduction conversion means (31,315,316) having first image density conversion means (315), which has a first conversion property for converting said image density signal to a first conversion signal and outputting said first conversion signal, and second image density conversion means (316), which has a second conversion property, different from said first conversion property, for converting a part of said image density signal corresponding to a low density portion to a second conversion signal, which indicates a value within a range where an image may not be developed, and outputting said second conversion signal;

   second line-reduction conversion means (31,317,318) having third image density conversion means (317), which has a third conversion property for converting said image density signal to a third conversion signal and outputting said third conversion signal, and fourth image density conversion means (318), which has a fourth conversion property, different from said third conversion property, for converting a part of said image density signal corresponding to a low density portion to a fourth conversion signal indicating a value within a range where an image may not be developed, and outputting said fourth conversion signal;

   first selection means (31,313) for alternately selecting said first or second image density conversion means (31,315,316) and said third or fourth image density conversion means (31,317,318) in a predetermined period;

   pulse width modulation means (30) for modulating pulse widths of said conversion signals output from said first and second line-reduction conversion means (31,315,316) and outputting a pulse width modulation signal;

   pulse width modulation signal period changing means (34) for changing a period of said pulse width modulation signal from said pulse width modulation means (30) and a selection period by said first selection means in accordance with said discrimination signal from said image signal discrimination means (42);

   second selection means (31,314) for selecting one from said first line-reduction conversion means (31,315,316) and said second line-reduction conversion means (31,317,318) based on said discrimination signal from said image signal discrimination means; and

   image formation means (200) for forming an image based on said pulse width modulation signal from said pulse width modulation means (30).

8. The image forming apparatus according to claim 7, wherein said first conversion property and said third conversion property are either different from each other or approximately the same.

9. The image forming apparatus according to any one of claims 7 and 8, wherein said first conversion property and said third conversion property convert a part of said image density signal that corresponds to a low density portion to a conversion signal, which indicates a value within a range where an image may be developed.

10. A method for forming an image using the image forming apparatus as set forth in any of the preceding claims.

FIG.1

FIG.2a

FIG.2b

FIG.2c

FIG.3a

FIG.3b

FIG.4a

FIG.4b

| | 400 lpi | 200 lpi | 141 lpi |
|---|---|---|---|
| HIGH DENSITY LINE IMAGE | GOOD | FAIR | POOR |
| LOW DENSITY LINE IMAGE | FAIR | GOOD | FAIR |
| HIGH DENSITY NATURAL IMAGE | FAIR | GOOD | FAIR |
| LOW DENSITY NATURAL IMAGE | POOR | FAIR | GOOD |

## FIG.5

PULSE WIDTH MODULATION SIGNAL FOR LARGE lpi

PULSE WIDTH MODULATION SIGNAL FOR SMALL lpi

↑ SWITCH    ↓ SWITCH

PRINTING DOTS

SAME INTERVALS (REPRODUCED WITH THE SAME DENSITY)

## FIG.6a

PULSE WIDTH MODULATION SIGNAL FOR LARGE lpi

PULSE WIDTH MODULATION SIGNAL FOR SMALL lpi

↑ SWITCH    ↓ SWITCH

PRINTING DOTS

DIFFERENT INTERVALS

REPRODUCED WITH HIGH DENSITY

REPRODUCED WITH LOW DENSITY OR WITH BLANKS

## FIG.6b

18

FIG.7

PULSE WIDTH
MODULATION
SIGNAL

START OF SCANNING
(SOS) SIGNAL

FIG.8

FIG.9

IMAGE CLOCK IN
IMAGE PROCESSING
CIRCUIT

LINE IMAGE/NATURAL IMAGE
DISCRIMINATION SIGNAL

sig. A

IMAGE CLOCK IN
IMAGE OUTPUT
DEVICE

PULSE WIDTH PERIOD
SWITCHING SIGNAL

LINE-REDUCTION
CONVERSION/NON-
CONVERSION SIGNAL

FIG.10

EP 0 717 553 A2

FIG.11

LOW–DENSITY LINE IMAGE
DENSITY SIGNAL

121

| 10 | 10 | 10 | 10 | 10 | 10 | 10 | 10 |
|----|----|----|----|----|----|----|----|
| 10 | 10 | 10 | 10 | 10 | 10 | 10 | 10 |
| 10 | 10 | 10 | 10 | 10 | 10 | 10 | 10 |
| 10 | 10 | 10 | 10 | 10 | 10 | 10 | 10 |
| 10 | 10 | 10 | 10 | 10 | 10 | 10 | 10 |
| 10 | 10 | 10 | 10 | 10 | 10 | 10 | 10 |

LUT SELECTION FOR
LINE IMAGE

RECORDING DOTS OF
LOW–DENSITY LINE IMAGE

124

| 1 | 2 | 1 | 2 | 1 | 2 | 1 | 2 |
|---|---|---|---|---|---|---|---|
| 1 | 2 | 1 | 2 | 1 | 2 | 1 | 2 |
| 1 | 2 | 1 | 2 | 1 | 2 | 1 | 2 |
| 1 | 2 | 1 | 2 | 1 | 2 | 1 | 2 |
| 1 | 2 | 1 | 2 | 1 | 2 | 1 | 2 |
| 1 | 2 | 1 | 2 | 1 | 2 | 1 | 2 |

123

122

| BO | BO | BO | BO | BO | BO | BO | BO |
|----|----|----|----|----|----|----|----|
| BO | BO | BO | BO | BO | BO | BO | BO |
| BO | BO | BO | BO | BO | BO | BO | BO |
| BO | BO | BO | BO | BO | BO | BO | BO |
| BO | BO | BO | BO | BO | BO | BO | BO |
| BO | BO | BO | BO | BO | BO | BO | BO |

HIGH–DENSITY LINE IMAGE
DENSITY SIGNAL

125

RECORDING DOTS OF
HIGH–DENSITY LINE IMAGE

FIG.12

EP 0 717 553 A2

FIG.13

EP 0 717 553 A2

LOW DENSITY LINE IMAGE DENSITY
SIGNAL (INPUT IMAGE)

141

| 00 | 40 | 40 | 40 | 40 | 40 | 40 | 40 |
| 00 | 00 | 40 | 40 | 40 | 40 | 40 | 40 |
| 00 | 00 | 00 | 40 | 40 | 40 | 40 | 40 |
| 00 | 00 | 00 | 00 | 40 | 40 | 40 | 40 |
| 00 | 00 | 00 | 00 | 00 | 40 | 40 | 40 |
| 00 | 00 | 00 | 00 | 00 | 00 | 40 | 40 |

NATURAL IMAGE/LINE IMAGE
AREA DISCRIMINATION

142

| I | T | T | T | T | T | T | T |
| I | I | T | T | T | T | T | T |
| I | I | I | T | T | T | T | T |
| I | I | I | I | T | T | T | T |
| I | I | I | I | I | T | T | T |
| I | I | I | I | I | I | T | T |

RESULT OF SELECTION OF
LUT AND PULSE WIDTH
PERIOD

144

| 0 | 0 | 0 | 0 | 1 | 2 | 1 | 2 |
| 0 | | 0 | 0 | 1 | 2 | 1 | 2 |
| 0 | | 0 | 0 | 1 | 2 | 1 | 2 |
| 2 | 1 | | 1 | 2 | 1 | 2 |
| 1 | 2 | | 0 | 0 | 0 | 0 |
| 1 | 2 | | 0 | | 0 | 0 |

LINE-REDUCTION CONVERSION/
NON-CONVERSION DISCRIMINATION

143

| NO | YES |
| NO | YES |
| NO | YES |
| YES | YES |
| YES | NO |
| YES | NO |

LOW DENSITY LINE IMAGE (OUTPUT IMAGE)

145

FIG.14

LOW-DENSITY NATURAL IMAGE
DENSITY SIGNAL

151

| 10 | 10 | 10 | 10 | 10 | 10 | 10 | 10 |
|----|----|----|----|----|----|----|----|
| 10 | 10 | 10 | 10 | 10 | 10 | 10 | 10 |
| 10 | 10 | 10 | 10 | 10 | 10 | 10 | 10 |
| 10 | 10 | 10 | 10 | 10 | 10 | 10 | 10 |
| 10 | 10 | 10 | 10 | 10 | 10 | 10 | 10 |
| 10 | 10 | 10 | 10 | 10 | 10 | 10 | 10 |

LUT SELECTION FOR
NATURAL IMAGE

RECORDING DOTS OF
LOW-DENSITY NATURAL IMAGE

154

| 1 | 1 | 2 | 2 | 1 | 1 | 2 | 2 |
|---|---|---|---|---|---|---|---|
| 2 | 2 | 1 | 1 | 2 | 2 | 1 | 1 |
| 1 | 1 | 2 | 2 | 1 | 1 | 2 | 2 |
| 2 | 2 | 1 | 1 | 2 | 2 | 1 | 1 |
| 1 | 1 | 2 | 2 | 1 | 1 | 2 | 2 |
| 2 | 2 | 1 | 1 | 2 | 2 | 1 | 1 |

153

152

| BO | BO | BO | BO | BO | BO | BO | BO |
|----|----|----|----|----|----|----|----|
| BO | BO | BO | BO | BO | BO | BO | BO |
| BO | BO | BO | BO | BO | BO | BO | BO |
| BO | BO | BO | BO | BO | BO | BO | BO |
| BO | BO | BO | BO | BO | BO | BO | BO |
| BO | BO | BO | BO | BO | BO | BO | BO |

HIGH-DENSITY NATURAL IMAGE
DENSITY SIGNAL

RECORDING DOTS OF
HIGH-DENSITY NATURAL IMAGE

155

FIG.15

FIG.16

IMAGE DENSITY
SIGNAL

PULSE WIDTH PERIOD
SWITCHING SIGNAL

421

RECORDING LINES
DICRIMINATION CIRCUIT
424

423

42 422

41

40

LINE REDUCTION
CONVERSION/NON-CONVERSION
SIGNAL

COLOR/GRADATION
ADJUSTMENT CIRCUIT

30

32

33

34

315 LUT-A

316 LUT-B

31

317 313

318 LUT-C

LUT-D

LUT-D

343

344

342

D/A

345

341

LUT
SELECTION
CIRCUIT

TRIANGULAR WAVE
OSCILLATOR

SELECTION CIRCUIT

START OF SCANNING (SOS) SIGNAL

EP 0 717 553 A2

FIG.17a

FIG.17b

FIG.17c

FIG.17d